# EUROPÄISCHE PATENTANMELDUNG

(11) **EP 1 194 017 A1**
(43) Veröffentlichungstag der Anmeldung: **03.04.2002**
(21) Anmeldenummer: 01123032.3
(22) Anmeldetag: 26.09.2001
(51) Int. Cl.: H05G 1/10

(54) **Spannungsversorgung für Röntgengenerator**

(30) Priorität: 28.09.2000 DE 10048146
(71) Anmelder: Philips Corporate Intellectual Property GmbH, 52064 Aachen (DE); Koninklijke Philips Electronics N.V., 5621 BA Eindhoven (NL)
(72) Erfinder: Lunding, Arne, c/o Philips Corp.Intell.Prop.GmbH, 52064 Aachen (DE); Osterholz, Heiko, c/o Philips Corp.Int.Prop.GmbH, 52064 Aachen (DE)
(74) Vertreter: Volmer, Georg, Dipl.-Ing.

(57) **Zusammenfassung**

Es wird eine Spannungsversorgung für Röntgengeneratoren beschrieben, die mindestens einen Wechselrichter (11, 12, 13), mindestens einen Transformator (111, 121, 131) und mindestens eine Spannungskaskade (112, 122, 132) zur Erzeugung einer Versorgungsspannung für eine Röntgenröhre (15) umfasst. Zur Erhöhung der erzielbaren Ausgangsleistung bei relativ geringem Gewicht und geringer Welligkeit bzw. Ausgangskapazität ist die Spannungskaskade im Hinblick auf ihre Kapazitäten und die Streuinduktivität der Transformatoren (111, 121, 131) so ausgelegt, dass sie durch entsprechende Ansteuerung des Wechselrichters in Resonanz betrieben werden kann. Besonders vorteilhaft im Hinblick auf die genannten Eigenschaften ist dabei insbesondere eine Zwei- oder Drei-Phasen-Ausführung, die mit einem Röntgensystem zu einem kompakten Tankgenerator integrierbar ist.

## Beschreibung

Die Erfindung betrifft eine Spannungsversorgung mit Wechselrichter und Spannungskaskade (Spannungsvervielfacher), zur Umwandlung einer an dem Wechselrichter anliegenden Eingangsspannung in eine Ausgangs-Gleichspannung (Versorgungsspannung), insbesondere eine Hochspannung für Röntgengeneratoren oder rotierende Röntgensysteme zum Beispiel in Computer-Tomographiegeräten oder für Eintankgeneratoren. Die Erfindung betrifft weiterhin eine entsprechende Röntgenanlage.

Röntgenanlagen umfassen im allgemeinen einen Röntgenstrahler mit einer Röntgenröhre zur Erzeugung von Röntgenstrahlen, sowie einen Röntgengenerator mit einer Spannungsversorgung (Hochspannungserzeuger), die ein Netzteil umfasst und die die zum Betrieb der Röntgenröhre erforderliche Hochspannung zur Verfügung stellt. Wenn der Röntgenstrahler und die die Hochspannung erzeugenden Teile zu einer konstruktiven Einheit kombiniert sind, spricht man auch von einem Eintankgenerator.

Zum Betrieb von Röntgenröhren sind Anodenspannungen von zum Beispiel etwa 150 kV bei einpoliger Versorgung oder etwa +/-75 kV bei zweipoliger Versorgung zwischen Anode und Kathode erforderlich. An diese Spannungen bzw. die Schaltung, mit der diese Spannungen erzeugt werden, werden zahlreiche Anforderungen gestellt. Zur Vermeidung von Schwankungen der erzeugten Röntgenstrahlen-Intensität sollen die Spannungen möglichst konstant sein und eine geringe Welligkeit aufweisen. Um dies erreichen zu können, ist mit steigenden Ausgangsleistungen bei gegebener Schaltfrequenz des Wechselrichters eine immer größere Ausgangskapazität zur Glättung der Spannung erforderlich.

Für eine schnelle Regelung der Ausgangsspannung und des Ausgangsstroms (z. B. im Pulsbetrieb der Röntgenröhre) und insbesondere für eine schnelle Abwärtsregelung der Ausgangsspannung bei kleinen Strömen ist jedoch eine möglichst kleine Ausgangskapazität anzustreben, die auch zur Begrenzung der Belastung der Röntgenröhre im Störungsfall so gering wie möglich sein soll.

Weiterhin kann es aus hier nicht näher beschriebenen applikatorischen oder konstruktiven Gründen vorteilhaft sein, eine einpolige Versorgungsspannung zu verwenden. Die dann zu realisierende Spannung von zum Beispiel 150 kV stellt besondere Anforderungen an das Design der Hochspannungstanks.

Für die Anwendung in Eintankgeneratoren und bei rotierenden Röntgensystemen, wie sie zum Beispiel in Computer-Tomographiegeräten (CT-Gerät) verwendet werden, ist ein geringes Gewicht bzw. ein geringer Raumbedarf von besonderer Bedeutung. Dies betrifft insbesondere solche Systeme, die mit einer Rotationsgeschwindigkeit von mehreren Umdrehungen pro Sekunde arbeiten, wie zum Beispiel Subsekundenscanner, bei denen Zentrifugalkräfte von 30 g oder mehr auftreten können.

Aus der US-PS 4.995.069 ist eine Spannungsversorgung für eine Röntgenröhre, insbesondere für ein CT-Gerät bekannt, bei der eine am Eingang anliegende Wechselspannung zunächst mit einem Gleichrichter gleichgerichtet wird. Zur Erzeugung einer zweipoligen Versorgungsspannung für die Röntgenröhre sind für jeden Pol an den Gleichrichter jeweils ein Wechselrichter zur Erzeugung einer Wechselspannung angeschlossen, an dessen Ausgang ein Transformator zur Heraufsetzung der Wechselspannung auf eine Zwischenspannung anliegt. Aus diesen Zwischenspannungen wird dann für jeden Pol mit jeweils einer Spannungskaskade die erforderliche Anoden- bzw. Kathodenspannung erzeugt. Zur Einsparung von Gewicht an dem sich drehenden Teil des CT-Gerätes sind die Eingangsspannungsquelle, der Gleichrichter, die Wechselrichter sowie die Transformatoren an einem stationären Teil angeordnet, wobei die Sekundäranschlüsse der Transformatoren über Schleifringe und Schleifkontakte mit den Eingängen der Spannungskaskaden verbunden sind. Dieser Weg wird jedoch als nachteilig angesehen, da die Schleifringe und - kontakte insbesondere bei hohen Drehzahlen und / oder hohen elektrischen Leistungen einem relativ starken Verschleiß unterworfen sind und häufige Wartungsarbeiten erfordern.

Eine der Erfindung zugrunde liegende Aufgabe besteht deshalb darin, eine insbesondere zum Betrieb einer Röntgenröhre in einem rotierenden Röntgensystem geeignete Spannungsversorgung zu schaffen, die im Verhältnis zu ihrer Ausgangsleistung ein besonders niedriges Gewicht und einen geringen Raumbedarf hat.

Weiterhin liegt der Erfindung die Aufgabe zugrunde, eine Spannungsversorgung der eingangs genannten Art zu schaffen, bei der auch bei hoher Ausgangsleistung und geringer Welligkeit die Ausgangsspannung und der Ausgangsstrom schnell geregelt werden können.

Schließlich soll mit der Erfindung eine Spannungsversorgung geschaffen werden, die in vorteilhafter Weise auch zur Erzeugung einer einpoligen Versorgungsspannung geeignet ist.

Zur Lösung dieser Aufgaben wird eine Spannungsversorgung der eingangs genannten Art geschaffen, die gekennzeichnet ist durch eine Steuerschaltung zur Erzeugung einer Schaltspannung, mit der der Wechselrichter mit einer solchen Schaltfrequenz betreibbar ist, dass in die Spannungskaskade ein Resonanzstrom eingeprägt wird.

Ein Vorteil dieser Lösung besteht darin, dass im Resonanzbetrieb eine Änderung der Ausgangsleistung mit sehr steiler Kennlinie durch eine relativ geringe Änderung der Schaltfrequenz und / oder des Tastverhältnisses, mit der / dem der Wechselrichter angesteuert wird, möglich ist.

Durch die Gewichtseinsparung eröffnet sich auch die Möglichkeit, in vorteilhafter Weise mobile Röntgensysteme zu schaffen.

Andererseits kann unter Verzicht auf die Gewichtseinsparung auch eine Dimensionierung mit besonders geringer Welligkeit bzw. hoher Ausgangsleistung gewählt werden.

Ein weiterer Vorteil dieser Lösung ergibt sich insbesondere bei hohen Ausgangsleistungen, da hierbei die anfallende Verlustleistung besser auf die Bauelemente verteilt wird, so dass diese einer wesentlich geringeren Belastung ausgesetzt sind.

Die Unteransprüche haben vorteilhafte Weiterbildungen der Erfindung zum Inhalt.

Die Ausführung gemäß Anspruch 2 hat den Vorteil, dass der Transformator im Vergleich zu bekannten Spannungsversorgungen mit Spannungsvervielfacher in Kaskadenbauweise (die nichtresonant arbeiten) bei gleicher Ausgangskapazität wesentlich kleiner ausgeführt werden kann, wenn auf eine weitere Verminderung der Welligkeit der Ausgangsspannung verzichtet wird. Dadurch ist es möglich, das Gewicht der Spannungsversorgung wesentlich zu verringern bzw. ein wesentlich günstigeres Verhältnis zwischen der Ausgangsleistung der Schaltung einerseits und ihrem Gewicht andererseits zu erzielen, als mit den bekannten Spannungskaskaden. Dadurch wird es insbesondere bei rotierenden Röntgensystemen wie zum Beispiel Computer-Tomographiegeräten möglich, in günstiger Weise den Röntgenstrahler und sämtliche Komponenten der Spannungsversorgung an dem rotierenden Teil anzuordnen, so dass über die Schleifringe und -kontakte eine nur relativ niedrige Eingangsspannung geführt werden muss.

Das Verhältnis zwischen Ausgangsleistung und Gewicht der Schaltung kann mit den Ausführungen gemäß den Ansprüchen 3 und 4 weiter verbessert werden. Dies beruht im wesentlichen darauf, dass zum Beispiel mit dem Übergang von einer auf 3 Phasen bei gleicher Ausgangskapazität der Spannungskaskade die Welligkeit der Ausgangsspannung um den Faktor 6 vermindert wird. Umgekehrt könnte bei gleicher Welligkeit die Ausgangskapazität entsprechend verkleinert werden, wenn, wie eingangs beschrieben wurde, zum Beispiel im Pulsbetrieb eine besonders schnelle Regelung der Ausgangsspannung bzw. des Ausgangsstroms an der Röntgenröhre von Bedeutung ist.

Mit der Ausführung gemäß Anspruch 5 kann durch Veränderung der Ansteuerung des Wechselrichters in einfacher Weise der Resonanzstrom in der Kaskade und damit die Ausgangsleistung geregelt werden. Diese Ausführung bietet sich insbesondere für einen Pulsbetrieb einer Röntgenröhre an.

Weitere Einzelheiten, Merkmale und Vorteile der Erfindung ergeben sich aus der folgenden Beschreibung von bevorzugten Ausführungsformen anhand der Zeichnung.

Es zeigt:
Fig.1 eine schematische Darstellung eines Computer-Tomographiegerätes zur Untersuchung eines Patienten;
Fig. 2 ein Prinzipschaltbild einer ersten Ausführungsform der Erfindung;
Fig. 3 ein Prinzipschaltbild einer zweiten Ausführungsform der Erfindung;
Fig. 4 ein Prinzipschaltbild einer dritten Ausführungsform der Erfindung.

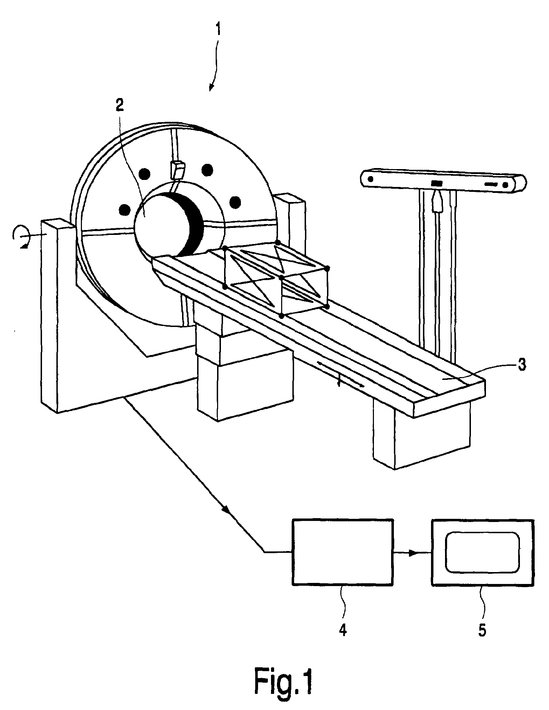

Figur 1 zeigt schematisch ein Computer-Tomographiegerät 1 mit einer Öffnung 2, in die ein auf einem Tisch 3 liegender Patient zur Untersuchung eingefahren wird. Gleichzeitig rotiert innerhalb des Gerätes 1 im wesentlichen entlang des Umfangs der Öffnung 2 ein Röntgensystem sowie ein geeigneter Detektor um den Patienten, so dass der Patient in bekannter Weise abgetastet wird. Aus den aufgenommenen Bilddaten wird mit einer Computer-gestützten Verarbeitungseinrichtung 4 ein Tomographie-Bild erzeugt und auf einem Monitor 5 wiedergegeben. Ein solches Gerät ist im Hinblick auf seine prinzipielle Funktion bekannt ist, so dass es hier nicht weiter erläutert muss.

Da das Röntgensystem mit bis zu mehreren Umdrehungen pro Sekunde um den Patienten rotiert, ist ein geringes Gewicht von besonderer Bedeutung. Einen erheblichen Anteil an dem Gesamtgewicht eines Röntgensystems trägt die Spannungsversorgung und hierbei insbesondere der oder die Transformatoren bei, die zur Erzeugung der zum Betrieb der Röntgenröhre benötigten Hochspannung erforderlich sind. Mit der erfindungsgemäßen Spannungsversorgung kann unter anderem dieses Gewicht wesentlich vermindert werden.

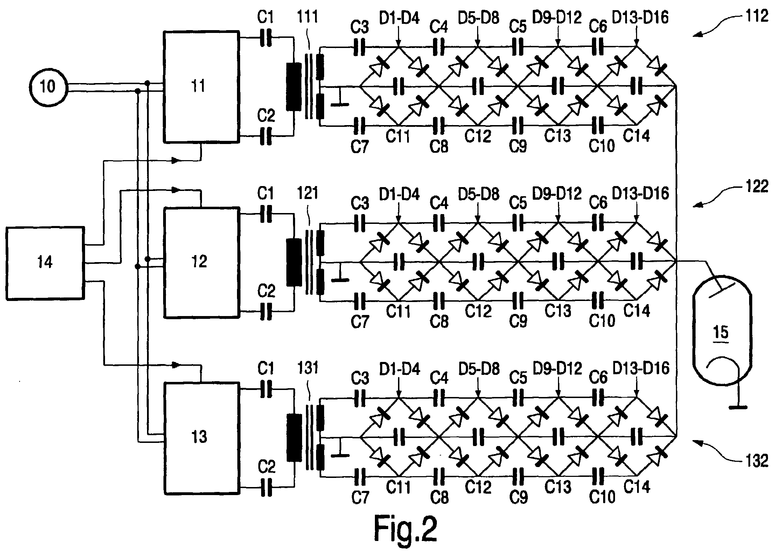

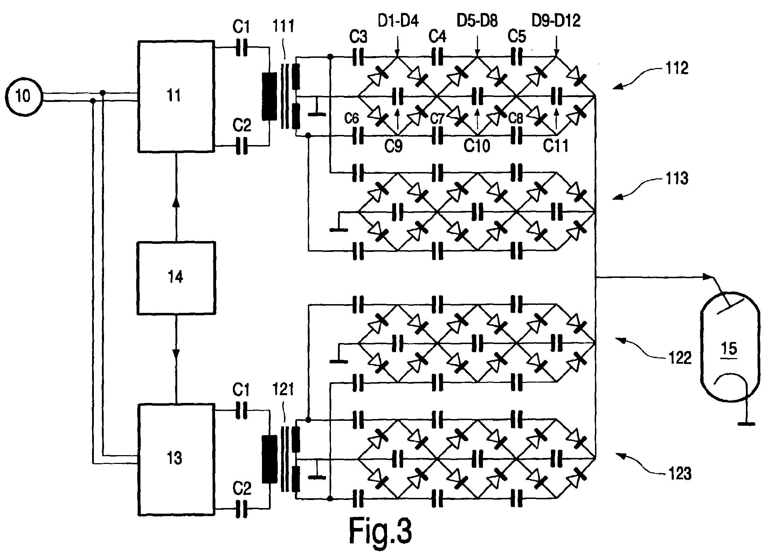

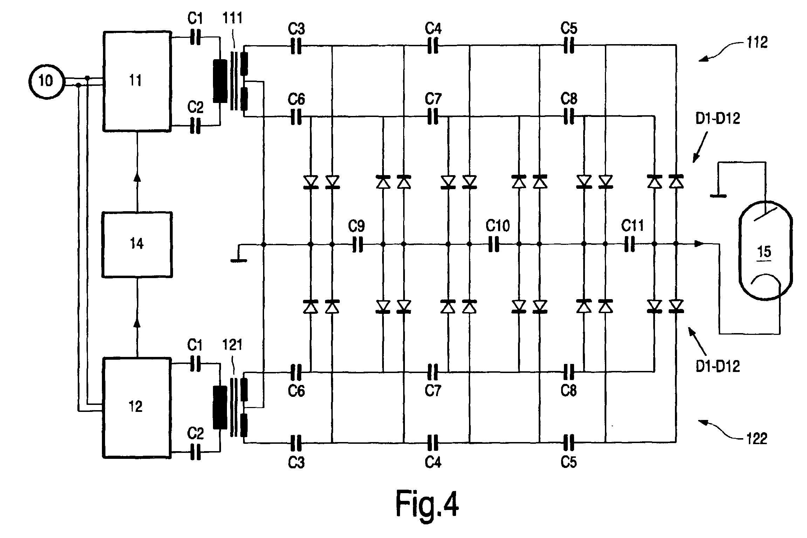

Eine erste Ausführungsform ist in Figur 2 gezeigt. Mit dieser ersten Schaltung wird, ebenso wie mit den anderen, in den Figuren 3 und 4 gezeigten (zweiten bzw. dritten) Schaltungen, eine einpolige Hochspannung (Versorgungs-Gleichspannung) für eine Röntgenröhre erzeugt, und zwar mit der ersten und zweiten Schaltung eine positive Hochspannung für die Anode, wobei die Kathode auf Masse liegt, und mit der dritten Schaltung eine negative Hochspannung für die Kathode, wobei die Anode auf Masse liegt.

Auch wenn hier ausschließlich die einpolige Ansteuerung erläutert wird, ist das erfindungsgemäße Schaltungsprinzip natürlich auch zur zweipoligen Versorgung einer Röntgenröhre geeignet, bei der an der Anode und der Kathode gleiche Spannungen mit unterschiedlicher Polarität liegen.

Die erste Schaltung gemäß Figur 2 stellt eine Drei-Phasen-Schaltung dar, die, wie eingangs bereits erläutert wurde, besondere Vorteile im Vergleich zu einer Ausführung mit einer oder zwei Phasen aufweist.

Im einzelnen umfasst die erste Schaltung einen ersten, einen zweiten und einen dritten Wechselrichter 11, 12, 13, an deren Eingängen eine niedrige Gleichspannung 10 (Eingangsspannung oder Zwischenkreisspannung) anliegt, und die ausgangsseitig über einen ersten und einen zweiten Kondensatoren C1 und C2, sowie über einen ersten, einen zweiten bzw. einen dritten Transformator 111, 121, 131 mit einer ersten, einer zweiten bzw. einer dritten Spannungskaskade 112, 122, 132 verbunden sind.

Die Spannungskaskaden 112, 122, 132 weisen jeweils vier Stufen auf, die in bekannter Weise aus Schubkondensatoren C3 bis C10, Glättungskondensatoren C11 bis C14 und Dioden D1 bis D16 aufgebaut sind. Die Ausgänge der Spannungskaskaden sind parallel geschaltet und mit der Anode einer Röntgenröhre 15 verbunden, deren Kathode an Masse liegt.

Wenn als Eingangsspannung eine Wechselspannung zur Verfügung steht, wird diese zunächst gleichgerichtet und dann den Wechselrichtern 11, 12, 13 zuführt.

Die Wechselrichter 11, 12, 13 können übliche Halb- oder Vollbrücken-Wechselrichter sein, mit denen die Glcichspannung 10 zum Beispiel unter Anwendung von Reihenresonanzkreisen und Halbleiterschaltern in bekannter Weise in eine Wechselspannung umgesetzt wird.

Die Kondensatoren C1, C2, die Streuinduktivität des ersten, zweiten bzw. dritten Transformators 111, 121, 131 - eventuell mit zusätzlich vorgesehenen Resonanzdrosseln (nicht dargestellt) - sowie die Ersatzkapazität der an den betreffenden Transformator angeschlossenen ersten, zweiten bzw. dritten Kaskade 112, 122, 132 bilden die bestimmenden Elemente jeweils eines Resonanzkreises. Im Resonanzfall, d.h. wenn die Wechselrichter 11, 12, 13 jeweils mit einer Schaltspannung betrieben werden, deren Frequenz auf die Resonanzfrequenz dieser Kreise abgestimmt Schaltfrequenz ist, wird durch jeden Resonanzkreis ein Resonanzstrom in die angeschlossene Kaskade eingeprägt. Ein Mittelabgriff der Sekundärwicklung kann dabei das Bezugspotential (Massepotential) definieren.

Zur Ansteuerung der Wechselrichter 11, 12, 13 ist eine Steuerschaltung 14 vorgesehen, mit der die in den Wechselrichtern vorhandenen Halbleiterschalter, bei denen es sich im allgemeinen um IGBTs handelt, geschaltet werden. Die Ansteuerung der drei Wechselrichter erfolgt dabei zyklisch nacheinander, so dass die drei erzeugten Wechselspannungen eine vorzugsweise gleiche Phasenverschiebung (120 Grad) gegeneinander aufweisen (3-Phasen-Bctrieb).

Diese Forderung kann durch entsprechende Auslegung der Wechselrichter 11, 12, 13 sowie der Steuerschaltung 14 einerseits und / oder geeignete Dimensionierung bzw. Anpassung der Streuinduktivität der Transformatoren sowie eine entsprechende Wahl der Kondensatoren erfüllt werden, wobei die Einstellung dieser Parameter natürlich auch von der Anzahl der Stufen in jeder Spannungskaskade 112, 122, 132 und der gewünschten Ausgangleistung abhängig ist.

In Resonanzfall fließt in den Kaskaden 112, 122, 132 jeweils ein Resonanzstrom, der eine besonders hohe Ausgangsleistung zur Folge hat. Da dieser Resonanzstrom bei einer Veränderung der Schaltfrequenz (Pulsfrequenz) der Schaltspannung, mit der die Wechselrichter 11, 12, 13 angesteuert werden, gegenüber dem Resonanzfall relativ steil abfällt, ist durch eine solche Veränderung eine einfache und sehr wirksame Regelung der Ausgangsleistung der Spannungsversorgungsschaltung mittels der Steuerschaltung 14 möglich. Da die Ausgangskapazität im Vergleich zu einer bekannten Schaltung mit gleicher Ausgangsleistung und bei gleicher Welligkeit geringer sein kann, kann diese Regelung auch sehr schnell durchgeführt werden.

Weiterhin ist eine solche Regelung auch über eine Veränderung des Tastverhältnisses der Schaltspannung, das heißt eine Veränderung der Pulslänge bei konstanter Pulsfrequenz, oder über eine Kombination beider Maßnahmen (Schaltfrequenz und Tastverhältnis) möglich. Die Steuerschaltung 14 ist zu diesem Zweck entsprechend umschaltbar bzw. einstellbar ausgelegt.

Figur 3 zeigt eine zweite Ausführungsform der Erfindung, die zweiphasig ausgelegt ist, wobei für jede Phase ein Wechselrichter 11, 12 vorgesehen ist, mit dem jeweils zwei Spannungskaskaden 112, 113 bzw. 122, 123 mit jeweils drei Stufen verbunden sind. Die Spannungskaskade 112, 113, 122, 123 sind ausgangsseitig parallel geschaltet und mit der Anode einer Röntgenröhre 15 verbunden, deren Kathode an Masse liegt.

Im einzelnen umfasst diese zweite Schaltung einen ersten und einen zweiten Wechselrichter 11, 12, die über eine Steuerschaltung angesteuert werden und an deren Eingängen eine niedrige Gleichspannung 10 anliegt. Ausgangsseitig sind die Wechselrichter jeweils über einen ersten und zweiten Kondensator C1, C2 sowie einen ersten bzw. einen zweiten Transformator 111, 121 mit einer ersten und einer zweiten bzw. einer dritten und einer vierten Spannungskaskade 112, 113; 122, 123 verbunden sind. Die erste und die zweite Spannungskaskade 112, 113 sind dabei parallel mit der Sekundärseite des ersten Transformators 111 verbunden, während die dritte und die vierte Spannungskaskade parallel an der Sekundärseire des zweiten Transformators 121 anliegen.

Die Spannungskaskaden 112, 113; 122, 123 weisen jeweils drei Stufen auf, die in bekannter Weise aus Schubkondensatoren C3 bis C8, Glättungskondensatoren C9 bis C11 und Dioden D1 bis D12 aufgebaut sind. Aus Gründen der Übersichtlichkeit sind in Figur 3 diese Elemente nur an der ersten Kaskade 112 bezeichnet.

Die Funktionsweise der Wechselrichter 11, 12, der Transformatoren 111, 121, sowie der Spannungskaskaden 112, 113; 122, 123 ist die gleiche, wie sie im Zusammenhang mit der ersten Schaltung gemäß Figur 2 beschrieben wurde und soll deshalb hier nicht wiederholt werden. Dies gilt auch für die Wahl der Schaltfrequenz, mit der in Abhängigkeit von den Kondensatoren C1, C2, der Streuinduktivität der Transformatoren 111 bzw. 121, sowie der jeweiligen Ersatzkapazität der Kaskaden 112, 113 bzw. 122, 123 die Resonanz erzeugt und ein Resonanzstrom in die Kaskaden eingeprägt wird.

Die Wechselrichter 11, 12 werden durch die Steuerschaltung 14 nacheinander so angesteuert, dass die beiden erzeugten Wechselspannungen eine vorzugsweise gleiche Phasenverschiebung gegeneinander aufweisen (2-Phasen-Betrieb). Die Ausgangsleistung wird wiederum über eine Veränderung der Schaltfrequenz und / oder des Tastverhältnisses der Pulsspannung, mit der / dem die Wechselrichter 11, 12, angesteuert werden, eingestellt. Figur 4 zeigt schließlich eine dritte Ausführungsform der Erfindung, mit der eine negative Hochspannung für die Kathode einer Röntgenröhre 15 erzeugt wird, wobei die Anode auf Masse liegt. Gleiche bzw. einander entsprechende Elemente wie in Figur 3 sind wieder mit gleichen Bezugsziffern bezeichnet.

Diese dritte Schaltung ist, ebenso wie die zweite Schaltung gemäß Figur 3, zweiphasig mit jeweils einem Wechselrichter 11, 12 für jede Phase ausgelegt. Am Eingang der Wechselrichter 11, 12 liegt wiederum eine Gleichspannung 10 an, während eine Steuerschaltung 14 zur zeitversetzten Ansteuerung der Wechselrichter mit einer wie oben erläutert gewählten, eine Resonanz erzeugenden Schaltfrequenz dient.

Die Ausgangsleistung wird wiederum über eine Veränderung der Schaltfrequenz und / oder des Tastverhältnisses der Pulsspannung an der Steuerschaltung 14, mit der / dem die Wechselrichter 11, 12, angesteuert werden, eingestellt.

Im Unterschied zu der zweiten Ausführungsform sind hierbei jedoch zwei Spannungskaskaden 112, 122 mit jeweils drei Stufen vorgesehen, wobei jede Kaskade Dioden D1 bis D12 und Kondensatoren C3 bis C8 aufweist und für beide Kaskaden eine gemeinsame Glättungssäule aus Kondensatoren C9 bis C11 vorhanden ist.

Die Ausgänge sind parallel geschaltet und mit der Kathode einer Röntgenröhre 15 verbunden, deren Anode auf Masse liegt.

Mit dem erfindungsgemäßen Schaltungsprinzip kann somit die mit Kaskaden erzielbare Spitzenleistung weiter erhöht werden. Auf Grund des dabei vergleichsweise geringen Gewichtes ist es möglich, kompakte Eintankgeneratoren für unterschiedliche Leistungsbereiche und Anwendungen, das heißt sowohl für die Aufnahme von fotografischen Röntgenbildern, als auch von bewegten Bildern, sowie für rotierende Röntgensysteme zu schaffen.

Besonders vorteilhaft ist schließlich, dass der für eine *n*-stufige Kaskade notwendige Eingangstransformator nur eine Ausgangsspannung von etwa U_{Röhre} / n erzeugen muss. Dies ermöglicht eine hochspannungsmäßig deutliche Verkleinerung der Transformatorkomponenten. Entsprechendes gilt auch für die Kondensatoren und Dioden, auf die sich die Leistungen jeweils relativ gleichmäßig verteilen, so dass sie nur relativ gering belastet sind.

Zur Verdeutlichung der mit der Erfindung erzielbaren Vorteile im Hinblick auf die geringe Belastung der Bauelemente soll für die erste Ausführungsform gemäß Figur 2 die dort dargestellte dreiphasige Auslegung mit einer zweiphasigen sowie einer einphasigen Auslegung verglichen werden. Es sei dabei angenommen, dass die Schaltfrequenz der Wechselrichter etwa 40 kHz beträgt und am Ausgang eine Spannung von etwa 100 kV bei einem Strom von etwa 1 A zur Verfügung steht.

Bei einer einphasigen Auslegung der Schaltung gemäß Figur 2, bei der nur eine Kaskade 112, ein Transformator 111 sowie ein Wechselrichter 11 vorhanden ist, wird bei vier Glättungskondensatoren C11 bis C14 mit einer Kapazität von jeweils etwa 1,1 nF sowie acht Schubkondensatoren C3 bis C10 mit einer Kapazität von jeweils etwa 11 nF eine Welligkeit DU_{A} (Ripple) der Ausgangsspannung von etwa 4 kV, das heißt etwa 4 % erzielt. Der mittlere Strom durch die Dioden D1 bis D16 beträgt dabei etwa 0,5 A.

Bei einer zweiphasigen Auslegung mit zwei Kaskaden 112, 122, zwei Transformatoren 111, 121 sowie entsprechend zwei Wechselrichtern 11, 12 wird bei jeweils vier Glättungskondensatoren C11 bis C14 in jeder Kaskade mit einer Kapazität von etwa 0,05 nF sowie jeweils acht Schubkondensatoren C3 bis C10 in jeder Kaskade mit einer Kapazität von jeweils etwa 5 nF eine Welligkeir der Ausgangsspannung von etwa 1 kV und somit 1 % erzielt. Der mittlere Strom durch die Dioden D1 bis D16 in jeder Kaskade beträgt dabei etwa 0,25 A.

Schließlich wird bei der dreiphasigen Auslegung mit drei Kaskaden 112, 122, 132 gemäß Figur 2 mit jeweils vier Glättungskondensatoren C11 bis C14 in jeder Kaskade mit einer Kapazität von etwa 0,05 nF sowie jeweils acht Schubkondensatoren C3 bis C10 in jeder Kaskade mit einer Kapazität von jeweils etwa 3,3 nF eine Welligkeit der Ausgangsspannung von nur etwa 0,7 kV (d.h. 0,7 %) erzielt. Der mittlere Strom durch die Dioden D1 bis D16 in jeder Kaskade beträgt dabei etwa 0,16 A.

Dies zeigt, dass mit zunehmender Anzahl von Phasen zwar die Anzahl der Bauelemente entsprechend steigt, dass diese jedoch bei gleichzeitig wesentlich geringerer Welligkeit der Ausgangsspannung trotzdem wesentlich kleiner dimensioniert werden können.

Weiterhin eröffnet die zwei- und insbesonderer die dreiphasige Ausführung aufgrund der damit verbundenen Verminderung der Ausgangsspannung der Transformatoren die Möglichkeit, die Transformatoren in Planartechnik zu realisieren und die Primär- und / oder die Sekundärwicklungen in Form von auf die Schaltungsplatine gedruckten Induktivitäten auszuführen. Damit wird eine weitere Gewichtseinsparung und Volumenreduzierung sowie eine Vereinfachung der Herstellung erzielt.

## Patentansprüche

1. Spannungsversorgung mit Wechselrichter und Spannungskaskade, zur Umwandlung einer an dem Wechselrichter anliegenden Eingangsspannung in eine Ausgangs-Gleichspannung,
**gekennzeichnet durch**
eine Steuerschaltung (14) zur Erzeugung einer Schaltspannung, mit der der Wechselrichter (11, 12, 13) mit einer solchen Schaltfrequenz betreibbar ist, dass in die Spannungskaskade (112, 122, 132; 113, 123) ein Resonanzstrom eingeprägt wird.

2. Spannungsversorgung nach Anspruch 1,
**dadurch gekennzeichnet,**
**dass** zwischen den Wechselrichter (11, 12, 13) und die Spannungskaskade ein Transformator (111, 121, 131) geschaltet ist, dessen Streuinduktivität zusammen mit der Kapazität der Spannungskaskade einen Resonanzkreis bildet.

3. Spannungsversorgung nach Anspruch 1,
**dadurch gekennzeichnet,**
**dass** mindestens zwei Wechselrichter (11, 12, 13), mindestens zwei Transformatoren (111, 121, 131) und mindestens zwei Spannungskaskaden (112, 122, 132; 113, 123) vorgesehen sind, wobei die Steuerschaltung (14) zum Ansteuern der Wechselrichter (11, 12, 13) in der Weise vorgesehen ist, dass die erzeugten Wechselspannungen eine Phasenverschiebung zueinander aufweisen.

4. Spannungsversorgung nach Anspruch 1,
**dadurch gekennzeichnet,**
**dass** drei Wechselrichter (11, 12, 13), drei Transformatoren (111, 121, 131) und drei Spannungskaskaden (112, 122, 132; 113, 123) vorgesehen sind, wobei die Wechselrichter durch die Steuerschaltung (14) mit einer Phasenverschiebung von etwa 120 Grad angesteuert werden.

5. Spannungsversorgung nach Anspruch 1,
**dadurch gekennzeichnet,**
**dass** die Steuerschaltung (14) so ausgelegt ist, dass die Frequenz und / oder das Tastverhältnis der Schaltspannung zur Veränderung der AusgangsGleichspannung und des Ausgangsstroms einstellbar ist.

6. Spannungsversorgung nach einem der Ansprüche 2 bis 5,
**dadurch gekennzeichnet,**
**dass** der / die Transformatoren (111, 121, 131) in Planartechnik als Induktivitäten in Form von auf eine Schaltungsplatine gedruckten Leiterbahnen ausgeführt sind.

7. Tankgenerator mit einem Röntgenstrahler und einem Röntgengenerator, **gekennzeichnet durch** eine Spannungsversorgung nach einem der Ansprüche 1 bis 6.

8. Röntgengenerator mit einer Spannungsversorgung nach einem der Ansprüche 1 bis 6.

9. Röntgenanlage mit einem Röntgenstrahler und einem Röntgengenerator nach Anspruch 8, insbesondere für mobile oder chirurgische Anwendungen.

10. Röntgenanlage nach Anspruch 9,
**dadurch gekennzeichnet,**
**dass** sie ein Computer-Tomographiegerät umfasst.
